Europäisches Patentamt

(19) European Patent Office

Office européen des brevets

(11) Publication number: **0 172 033**
**B1**

(12) **EUROPEAN PATENT SPECIFICATION**

(45) Date of publication of patent specification: **24.10.90**

(21) Application number: **85305824.6**

(22) Date of filing: **15.08.85**

(60) Divisional application **90105549.1** filed on
**15/08/85.**

(51) Int. Cl.⁵: **F 02 B 75/00**

(54) Internal combustion engine.

(30) Priority: **15.08.84 GB 8420682**

(43) Date of publication of application:
**19.02.86 Bulletin 86/08**

(45) Publication of the grant of the patent:
**24.10.90 Bulletin 90/43**

(84) Designated Contracting States:
**AT BE CH DE FR GB IT LI LU NL SE**

(56) References cited:
**EP-A-0 091 289**
**DE-A-1 451 715**
**DE-A-2 346 150**
**DE-C- 385 516**
**DE-C- 414 412**
**US-A-1 307 282**
**US-A-3 796 196**
**US-A-3 924 579**
**US-A-4 127 094**
**US-A-4 170 213**

(73) Proprietor: **Yang, Tai-Her**
**5-1 Tay Pyng St.**
**Shi Hwu Jenn Jang Huah Shiann (TW)**

(72) Inventor: **Yang, Tai-Her**
**5-1 Tay Pyng St.**
**Shi Hwu Jenn Jang Huah Shiann (TW)**

(74) Representative: **Arthur, Bryan Edward et al**
**Withers & Rogers 4 Dyer's Buildings Holborn**
**London EC1N 2JT (GB)**

Courier Press, Leamington Spa, England.

## Description

The present invention relates to internal combustion engines and, in particular, to continuous linear internal combustion engines applicable, for example, to mono rail systems.

It is an object of the invention, which is defined in the appended claims, to provide a new design of engine of improved efficiency, lower pollution and reduced vibration.

A continuous linear internal combustion engine is described, inter alia, in US Patent 4,127,094. This engine has a piston traversing a tubular chamber sealed by gate valves, and the piston has an internal chamber into which fuel is supplied.

The present invention will be further described with reference to the accompanying drawings, in which

Figure 1 is a fragmentary plan view of the linear trackway of an engine according to the invention, with the components of the moving portion of the engine indicated in dotted outline.

Figure 2 is a sectional elevation of part of the engine of Figure 1.

Figures 3(a) to 3(e) are diagrams illustrating the operation of the engine of Figures 1 and 2.

Figures 5 and 6 are, respectively, a fragmentary plan view, and a sectional elevation, of a modified engine.

Figures 6 and 7 are, respectively, a plan and sectional elevation of a further modification of the engine.

Figures 8(a) to 8(e) are diagrams illustrating the operation of the engine of Figures 6 and 7, and

Figures 9 and 10 are again a plan and a sectional elevation of a further modified engine.

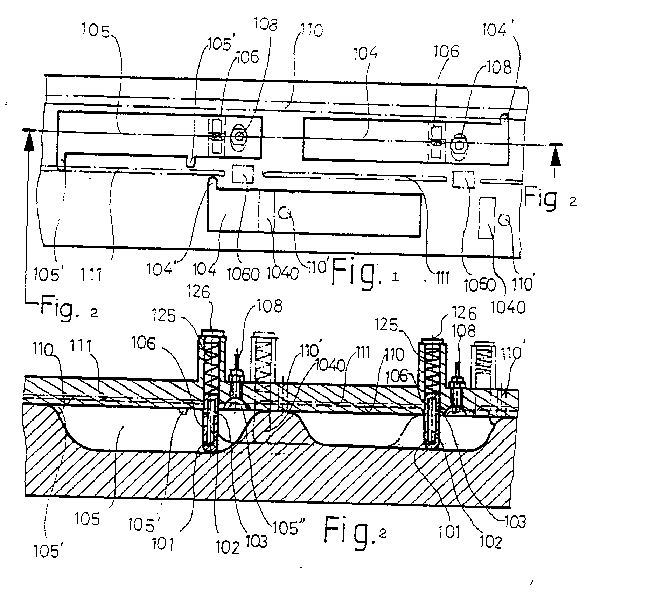

Referring first to Figures 1 and 2, the engine comprises a track formed with two rows of recesses. The first row of recesses consists of alternately shallower recesses 104, forming intake chambers in which combustion gas, i.e. a petrol-air mixture in the case of a petrol engine, and air if the engine is a diesel type engine, is taken in and compressed. Deeper chambers 105 form combustion chambers in which fuel is burned to provide power for the engine. The chamber 104 has an extension 104' which communicates with a groove in the moving portion of the engine through which the supply of combustion gas is received. The combustion chamber 105 has two extensions 105', one of which communicates with a groove 111 in the moving portion of the engine through which the burnt combustion gases are exhausted, and the other, which is shorter, communicates with a transfer port 1060 in the moving portion of the engine. Vanes 106, which are mounted in the moving portion of the engine and are spring loaded, traverse these chambers in operation, and act as pistons for drawing in gas or air, and fuel nozzles or ignition devices 108, according to the type of engine, are also mounted in the moving part.

The trackway also has a second row of recesses similar to the intake recesses 104 of the first row, and having extensions 104' which will communicate with the transfer port 1060 in the moving part as it passes. A spring-loaded vane 1040 in the moving part acts as a piston traversing this chamber, and an inlet for combustion gas 110' is provided just to the rear of this vane.

Referring now particularly to Figure 2, the vane 106 has an internal high pressure chamber with an inlet 101 provided with a non-return valve near its tip, and an outlet 103 positioned at a distance from the tip such that it is exposed while the vane is traversing the combustion chamber, but is covered, and therefore sealed, by the body of the moving portion of the engine while the vane is traversing the relatively shallower intake chamber. Figure 2 also shows the mounting 125 of a vane. The vane 1040 which is indicated in dotted outline in the section of Figure 2 does not have this structure, but is a simple solid vane, similarly spring-loaded.

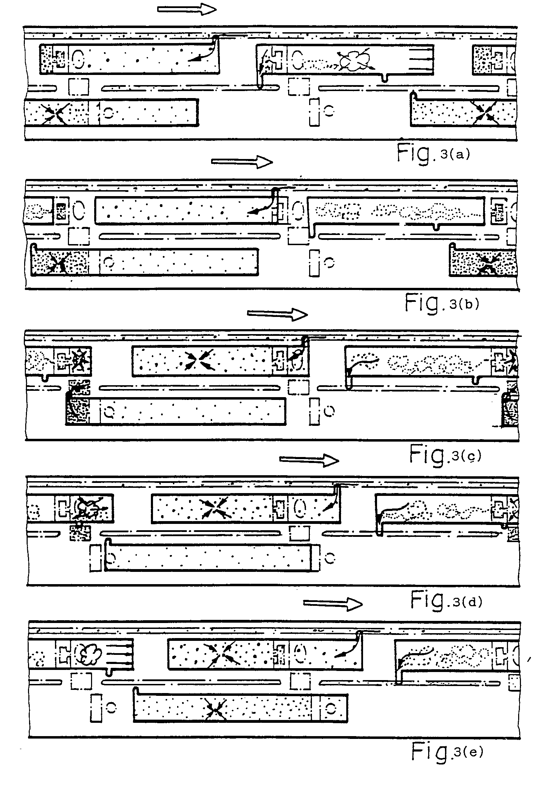

Figures 3(a) to 3(e) are diagrams showing successive stages in the operation of the engine. The diagrams are taken from a viewpoint on the moving portion of the engine, so that the trackway with its recesses is moving relatively to the right in the views shown in the figures.

Referring first to Figure 3(a), the first of the recesses in the first or upper row is an intake chamber, with the vane near the end of the compression stroke. At the left hand end the combustion gas is being compressed into the high pressure chamber within the vane, whereas at the right hand end combustion gas is still being drawn in from the inlet groove. The second recess is a combustion chamber approaching the end of its power stroke, and with residual gas from the previous power stroke still being exhausted into the exhaust passage from the region to the left of the vane. In the lower row of recesses, combustion gas is being compressed.

Figure 3(b) is a similar view at a slightly later moment. In the first row of recesses, a vane is about to enter each intake and compression chamber. In the second row gas in the recesses is becoming highly compressed.

Figure 3(c) shows the commencement of the next power stroke. Gas held under high pressure within the high pressure chamber of the vane is released as the vane enters the deeper chamber and the spark plug (or in the case of a diesel engine, the fuel jet) causes the fuel to ignite. At the same time, in the second row of chambers highly compressed gas is now being transferred to the transfer port, while combustion gas in the intake chambers of the first row is becoming compressed.

Figure 3(d) shows the situation a fraction later, during the power stroke. Compressed gas from the transfer port has been added to the burning gas in the combustion chamber of the upper row, making further power available for the power stoke. Exhaust gas to the left of the vane from the previous power stroke is being exhausted into the exhaust groove.

Figure 3(e) shows a later stage with the power stroke continuing, and gas being compressed in the intake chambers of the upper and the lower row. The cycle then repeats.

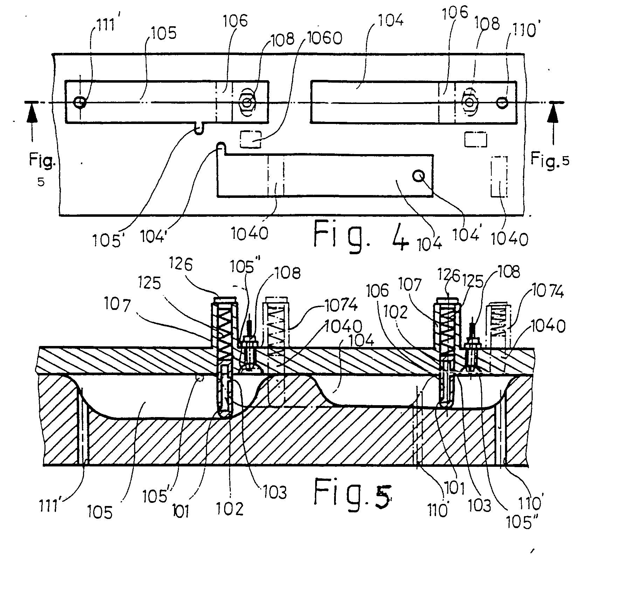

Figures 4 and 5 show a modification of the engine in which the inlet and exhaust arrangements are very much simplified. In these figures inlet passages 110' and exhaust passages 111' are drilled into the intake and combustion chambers of the trackway so that the grooves and projections required for inlet and exhaust in the arrangement of Figures 1 and 2 are avoided. The only passage required in the moving portion of the engine is the transfer port 1060. The operation of this embodiment is identical to that described with reference to Figures 3(a) to 3(e).

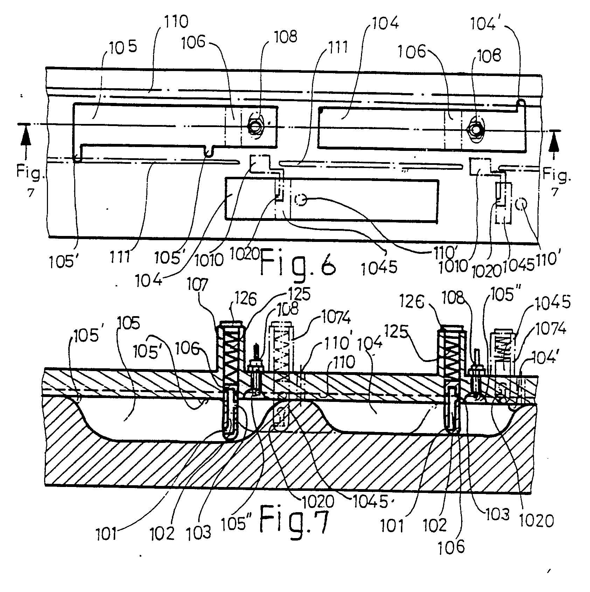

Figures 6 and 7 show a further modification of the arrangement of Figures 1 and 2. In this modification the chambers of the second row do not communicate with the transfer port 1060, but instead the vane that traverses these chambers is provided with an internal passageway 1020 communicating with the transfer port 1010.

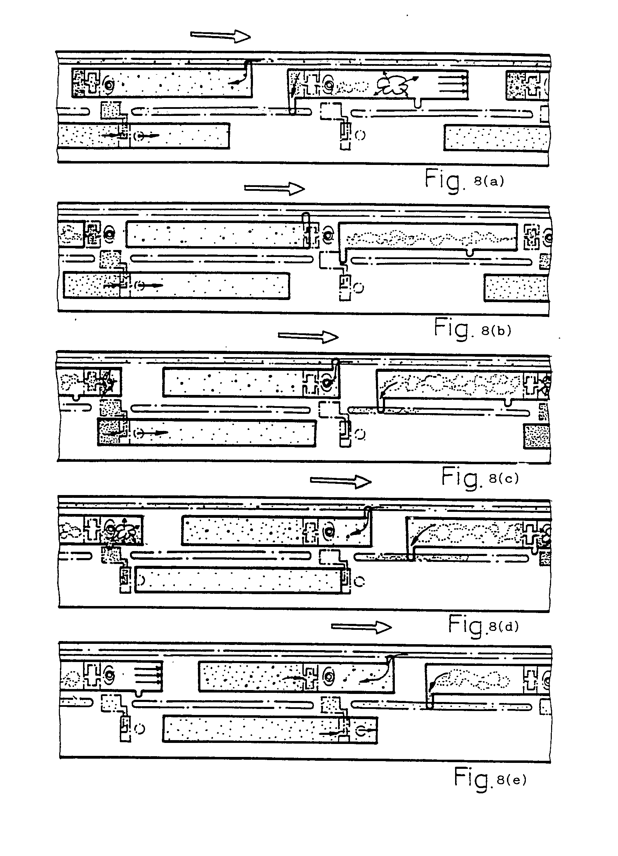

Successive stages in the operation of this engine are shown in Figures 8(a) to 8(e). The cycle of operations is analogous to that already described with reference to Figures 3(a) to 3(e).

Referring first to Figure 8(a), the first of the recesses in the first or upper row is an intake chamber and the vane is near the end of its compression stroke. At the left hand end the combustion gas is being compressed into the high pressure chamber within the vane, whereas at the right hand end combustion gas is still being drawn in from the inlet groove. The second recess in this row is a combustion chamber approaching the end of its power stroke, with residual gas from the previous power stroke still being exhausted into the exhaust passage from the region to the left of the vane. In the lower row of recesses, combustion gas is being compressed to the left of the vane, and is passing under pressure, through the passage within the vane into the transfer port.

Figure 8(b) is taken at a slightly later moment and shows a vane about to enter each intake and compression chamber in the first row. In the second row the compression of gas into the transfer port is continuing.

Figure 8(c) shows the beginning of the next power stroke and in Figure 8(d) a moment later, the very highly compressed gas in the transfer port is transferred to the burning mixture making further power available for this power stroke. At the same time burnt gas from the previous power stroke on the left hand side of the vane is being exhausted into the exhaust groove.

Finally, Figure 8(e) shows a slightly later stage in which the power stroke is continuing and fresh gas is being compressed in the intake chambers of both the upper and the lower rows.

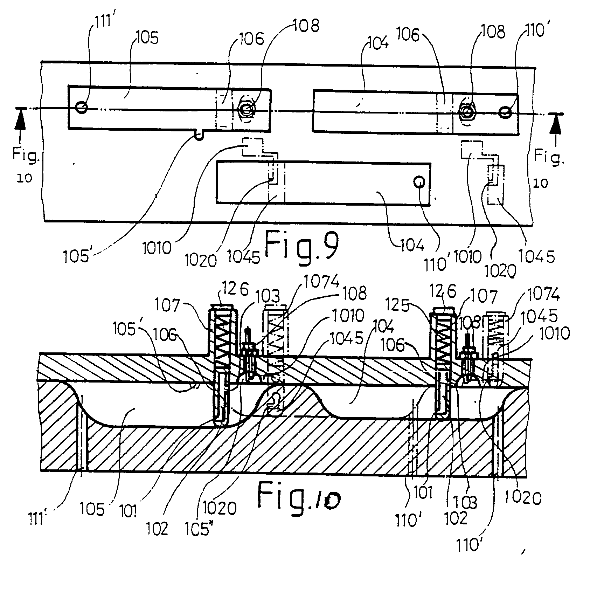

Figures 9 and 10 show a further modification of the arrangement of Figures 6—8. In this modification the inlet and exhaust grooves are replaced by inlet and exhaust passages 110' and 111' drilled into the intake and combustion chambers of the trackway. The operation of this embodiment is identical to that described with reference to Figures 8(a) to 8(e).

**Claim**

A continuous linear internal combustion engine comprising a plurality of intake chambers (104), a plurality of combustion chambers (105), and a piston traversing the intake and combustion chambers, the piston containing a high-pressure chamber (102) and having an inlet (101) through which combustion gas is compressed into the high-pressure chamber, and an outlet port (103) from the high-pressure chamber, characterised in that the engine comprises a track formed with two parallel rows of recesses, the recesses of a first row being alternately of lesser and of greater depths so as to provide said intake chambers and said combustion chambers respectively, said piston is provided for the first row comprising a spring-loaded vane (106) in which the high-pressure chamber (102) has a non-return valve at its inlet (101) and an outlet port (103) positioned so that it is exposed while the vane is within a combustion chamber and is covered throughout the time the vane is traversing an intake chamber, a further spring-loaded vane (1040) is provided to compress combustion gas in the recesses of the second row, and a transfer path (1060) allows the combustion gas so compressed to be transferred to the combustion chambers of the first row.

**Patentanspruch**

Eine kontinuierliche, lineare Kraftmaschine für innere Verbrennung mit einer Mehrzahl von Einlaßkammern (104), einer Mehrzahl von Brennkammern (105) und einem die Einlaß- und Brennkammern durchquerenden Kolben, der eine Hochdruckkammer (102) enthält und einen Einlaß (101), durch den hindurch Brenngas in die Hochdruckkammer hinein verdichtet wird, sowie einen aus der Hochdruckkammer heraus führenden Auslaß (103) besitzt, dadurch gekennzeichnet, daß die Maschine eine Laufbahn besitzt, die mit zwei parallelen Reihen von Vertiefungen versehen ist, wobei die Vertiefungen einer ersten Reihe abwechselnd eine geringere und eine größere Tiefe besitzen, um die genannten Einlaßkammern bzw. die genannten Brennkammern zu bilden, daß der genannten Kolben, der für die erste Reihe vorgesehen ist, ein federbelastetes Blatt (106) aufweist, innerhalb dem die Hochdruckkammer (102) ein an ihrem Einlaß (101) befindliches Rückschlagventil aufweist und an dem ein Auslaß (103) so gelegen ist, daß er freigegeben ist, während sich das Blatt innerhalb einer Brennkammer befindet, und er während des ganzen Zeitraums verdeckt ist, in dem das Blatt eine Einlaßkammer durchquert, daß ein weiteres federbelastetes Blatt (1040) vorgesehen ist, um Brenngas in den Vertiefungen der zweiten Reihe zu verdichten, und daß ein Überströmpfad (1060) es ermöglicht, daß so verdichtetes Brenngas zu den Brennkammern der ersten Reihe überführt wird.

## Revendication

Moteur linéaire continu à combustion interne comprenant une pluralité de chambres d'admission (104), une pluralité de chambres de combustion (105), et un piston traversant les chambres d'admission et de combustion, le piston contenant une chambre haute-pression (102) et ayant une entrée (101) par laquelle est admis le gaz de combustion compressé dans la chambre haute-pression, et un orifice de sortie (103) de la chambre haute-pression, caractérisé en ce que le moteur comporte une glissière de guidage profilée avec deux rangées parallèles d'évidements, les évidements d'une première rangée étant alternativement de profondeurs moindres et supérieures afin de définir respectivements chambres d'admission et s chambres de combustion, ledit piston est prévu pour la première rangée et comprend une palette à ressort (106) dans laquelle la chambre haute-pression (102) possède un clapet anti-retour à son entrée (101) et un orifice de sortie (103) positionné de façon à être exposé lorsque la palette se trouve dans une chambre de combustion et à être couvert pendant toute la durée où la palette traverse une chambre d'admission, une autre palette à ressort (1040) étant prévue pour comprimer le gaz de combustion dans les évidements de la seconde rangée, et un passage (1060) de transfert autorisant le gaz de combustion ainsi comprimé à être transféré aux chambres de combustion de la première rangée.

Fig. 1

Fig. 2

Fig.3(a)

Fig.3(b)

Fig.3(c)

Fig.3(d)

Fig.3(e)

Fig. 4

Fig. 5

Fig. 6

Fig. 7

EP 0 172 033 B1

Fig. 8(a)

Fig. 8(b)

Fig. 8(c)

Fig. 8(d)

Fig. 8(e)

Fig.9

Fig.10